# DEMANDE DE BREVET EUROPEEN

(11) **EP 4 228 076 A1**
(43) Date de publication de la demande: **16.08.2023**
(21) Numéro de dépôt: 23152973.6
(22) Date de dépôt: 23.01.2023
(51) Int. Cl.: H01M 50/503, H01M 50/559, H01M 10/643, H01M 10/653, H01M 10/6551, H01M 10/6562, H01M 50/516, H01M 10/613, H01M 10/6553, H01M 50/529, H01M 50/548, H01M 50/505

(54) **STRUCTURE DE CONNEXION DE BATTÉRIE D`ACCUMULATEURS**

(30) Priorité: 24.01.2022 FR 2200563
(71) Demandeur: Commissariat à l'énergie atomique et aux énergies alternatives, 75015 Paris (FR)
(72) Inventeur: PANARIELLO, Remy, 38054 Grenoble Cedex 9 (FR); MASSON, Olivier, 38054 GRENOBLE cedex 09 (FR)
(74) Mandataire: INNOV-GROUP

(57) **Abrégé**

Structure de connexion de batterie d'accumulateurs, adaptée à connecter électriquement les accumulateurs d'une batterie d'accumulateurs, et comportant un élément conducteur qui comprend : des lames de contact (4) séparées s'étendant chacune selon un plan de connexion (P), ces lames de contact (4) étant chacune adaptée à être connectée à une borne de batterie d'accumulateur, toutes les lames de contact (4) s'étendant dans le même plan de connexion (P) ; un ensemble de lames de conduction (5) reliant électriquement les lames de contact (4), ces lames de conduction (5) s'étendant sensiblement perpendiculairement au plan de connexion (P).

## Description

### DOMAINE TECHNIQUE

L'invention concerne le domaine du stockage de l'énergie électrique et vise plus particulièrement les éléments de connexion permettant d'assembler plusieurs accumulateurs électriques pour former une batterie d'accumulateurs.

### ART ANTÉRIEUR

Une batterie d'accumulateurs (ou « pack batterie »), est généralement constituée d'un ensemble d'accumulateurs électrochimiques assemblés sur une structure mécanique commune. Chacun des accumulateurs comporte deux bornes de connexion correspondant à ses deux électrodes, et ces accumulateurs sont électriquement connectés en série ou en parallèle, la batterie d'accumulateurs ainsi constituée comportant elle-même deux bornes de connexion.

La connexion électrique des accumulateurs entre eux est généralement assurée par des clinquants, qui sont de fines tôles planes de matériau conducteur. Les accumulateurs sont disposés de sorte que leurs bornes à connecter ensemble s'étendent selon un même plan de connexion, et le clinquant est disposé selon ce plan de connexion, chaque borne d'accumulateur à connecter étant électriquement reliée au clinquant.

Par ailleurs, les demandes de brevet CN103490032, WO2013155701, et JP2013105674 décrivent des batteries d'accumulateurs munies de barres de connexion de puissance qui comportent des ailettes de refroidissement s'étendant transversalement à la barre de connexion. Ces agencements permettent d'ajouter une fonction de dissipation thermique aux barres de connexion, sans influer sur la section de passage pour le courant électrique.

### EXPOSÉ DE L'INVENTION

L'invention a pour but d'améliorer les structures de connexion de batteries d'accumulateurs de l'art antérieur.

À cet effet, l'invention vise une structure de connexion de batterie d'accumulateurs, adaptée à connecter électriquement les accumulateurs d'une batterie d'accumulateurs. Cette structure de connexion comporte un élément conducteur qui comprend : des lames de contact séparées s'étendant chacune selon un plan de connexion, ces lames de contact étant chacune adaptée à être connectée à une borne de batterie d'accumulateur, toutes les lames de contact s'étendant dans le même plan de connexion ; un ensemble de lames de conduction reliant électriquement les lames de contact, ces lames de conduction s'étendant sensiblement perpendiculairement au plan de connexion.

Selon un autre objet, l'invention vise un procédé d'assemblage d'une batterie d'accumulateurs, comportant les étapes suivantes :
- mise en position d'une structure de connexion, telle que décrite ci-dessus, sur un ensemble d'accumulateurs ;
- soudage de chaque lame de contact sur une borne d'un des accumulateurs dudit ensemble d'accumulateurs, en disposant une tête de soudage dans ladite cavité.

La structure de connexion de batterie d'accumulateurs selon l'invention réalise sa fonction principale de conduction électrique entre différentes bornes d'accumulateurs grâce à une structure à la fois rigide et légère.

L'invention allie une importante section totale de conduction avec une faible épaisseur des éléments de conduction individuels (les lames de conduction). La faible épaisseur des lames de conduction peut être compensée par leur surface, en fonction de la section nécessaire pour une application donnée. La conduction électrique est réalisée par les lames de contact uniquement pour ce qui est du raccordement électrique aux accumulateurs, tandis que toute la conduction électrique entre accumulateurs est réalisé par les lames de conduction, c'est-à-dire par des parois minces qui s'étendent dans une direction perpendiculaire au plan de connexion.

La structure de connexion selon l'invention comporte ainsi des surfaces sur les lames de contact qui sont uniquement dédiées au raccordement électrique avec les accumulateurs, et des lames de conduction assurant la conductivité électrique selon une hauteur significative suivant une direction perpendiculaire au plan de connexion.

Le courant électrique circule dans tout le volume de l'élément conducteur de la structure de connexion, dans les trois directions de l'espace pour offrir une section de passage adéquate, évitant les échauffements excessifs.

La structure de connexion selon l'invention facilite également les opérations de raccordement électrique aux accumulateurs grâce aux lames de contact qui sont dédiées à cette fonction et dont la forme et l'association avec les lames de conduction adjacentes peuvent être aménagées pour faciliter les opérations de connexion, notamment par soudage.

La structure de connexion s'étendant de manière significative dans la direction perpendiculaire au plan de connexion (les lames de conduction comportant par définition une surface importante par rapport à leur épaisseur), ce qui confère à la structure de connexion une grande rigidité mécanique. La structure de connexion peut ainsi jouer un rôle structurel et compléter voire remplacer les éléments mécaniques qui sont généralement prévus pour l'assemblage des accumulateurs sous forme de batterie.

La structure de connexion selon l'invention bénéficie d'une fonction naturelle de dissipation thermique grâce à la disposition des lames de conduction qui sont perpendiculaires au plan de connexion et qui ménagent ainsi entre elles des ouvertures pouvant déboucher sur les accumulateurs. Les lames de conduction sont à la fois traversées par le courant électrique et à la fois permettent d'augmenter significativement la surface d'échange avec l'air ambiant ou avec un fluide de refroidissement. L'invention est compatible avec des batteries mettant en oeuvre un flux de fluide caloporteur qui peut alors s'écouler le long des surfaces exposées par les lames de conduction.

Par ailleurs, le fait de s'étendre significativement dans une direction perpendiculaire au plan de connexion confère à la structure de connexion des formes alvéolaires qui peuvent également servir à absorber de l'énergie mécanique, en cas de choc notamment, et jouer ainsi un rôle de protection mécanique des accumulateurs.

La disposition des lames de conduction peut par ailleurs former une canalisation de dégazage. Lors d'un éventuel dégazage des cellules électrochimiques constituant les accumulateurs, les gaz et débris chauds sont projetés à typiquement 45 degrés par rapport à l'axe longitudinal de ces cellules. Si ces gaz et débris atteignent les cellules environnantes, un risque de propagation apparait. La structure de connexion peut présenter une hauteur (dans la direction perpendiculaire au plan de connexion) suffisante afin de canaliser les éjections. La canalisation ainsi créée peut ensuite orienter les flux vers l'extérieur de la batterie, ou vers des zones ou conduits prévus à cet effet. L'utilisation de matériaux présentant une grande résistance thermique (de préférence supérieure à 600°C) est préférable dans ce cas, ce qui est le cas de nombreux métaux.

La structure de connexion selon l'invention peut comporter les caractéristiques additionnelles suivantes, seules ou en combinaison :
- chaque lame de contact et une lame de conduction délimitent une cavité dont la lame de contact constitue le fond et dont ladite lame de conduction constitue les parois latérales ;
- les lames de conduction délimitent entre elles des alvéoles débouchant de part en part dans la direction sensiblement perpendiculaire au plan de connexion ;
- l'ensemble de lames de conduction comporte une paroi cylindrique interne fixée sur la périphérie de chaque lame de contact, cette paroi cylindrique interne s'étendant selon un cylindre dont la base correspond au contour de la lame de contact ;
- l'ensemble de lames de conduction comporte une paroi cylindrique externe coaxiale à la paroi cylindrique interne, la paroi cylindrique interne et la paroi cylindrique externe étant reliées par des ailettes angulairement réparties autour de la paroi cylindrique interne ;
- l'élément conducteur comporte une pluralité de structures élémentaires identiques formées chacune d'une lame de contact et de plusieurs lames de conduction, l'ensemble de lames de conduction comportant de plus des lames de jonction reliant les structures élémentaires entre elles ;
- les lames de contact sont en forme de disque ;
- chaque lame de contact comporte une ouverture traversante de soudage ;
- les lames de contact et l'ensemble de lames de conduction sont faits d'une seule pièce ;
- la structure comporte un connecteur électrique s'étendant dans la direction perpendiculaire au plan de connexion, et qui est électriquement relié à l'élément conducteur ;
- les lames de conduction et les lames de contact sont formées de clinquants métalliques.

Le procédé selon l'invention peut comporter les caractéristiques additionnelles suivantes, seules ou en combinaison :
- ladite tête de soudage est une tête laser et, lors de l'étape de soudage, la tête de soudage est appuyée sur une lame de conduction, de sorte à maintenir un écartement prédéterminé entre la lame de contact et la tête de soudage ;
- le procédé comporte une étape préliminaire de fabrication de la structure de connexion par fabrication additive.

### PRÉSENTATION DES FIGURES

D'autres caractéristiques et avantages de l'invention ressortiront de la description non limitative qui suit, en référence aux dessins annexés dans lesquels :
- la figure 1 représente une structure de connexion selon l'invention ;
- la figure 2 représente une batterie d'accumulateurs comportant des structures de connexion selon l'invention ;
- la figure 3 représente la batterie de la figure 2 munie d'un capot ;
- la figure 4 représente la batterie de la figure 2 munie d'un capot et de couvercles.

Les éléments similaires et communs aux divers modes de réalisation portent les mêmes numéros de renvoi aux figures.

### DESCRIPTION DÉTAILLÉE

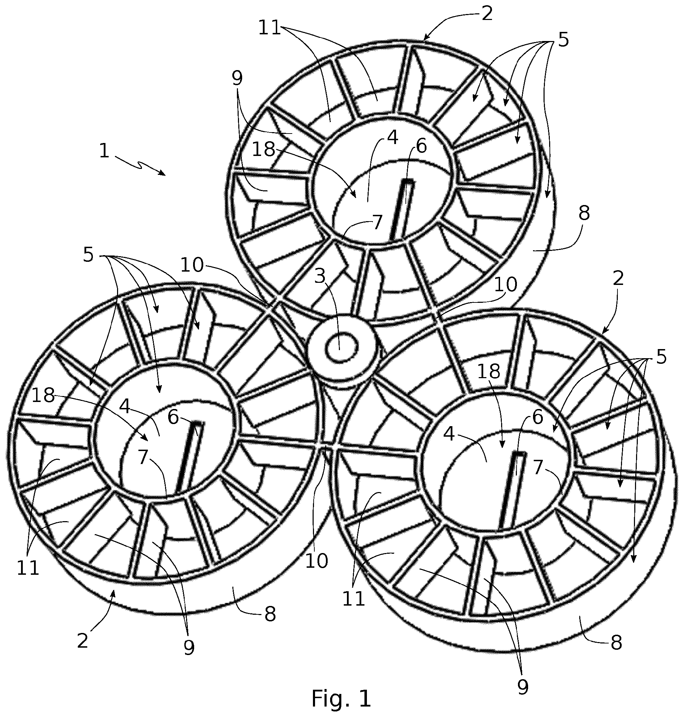

La figure 1 représente une structure de connexion 1 selon l'invention. Cette structure de connexion 1 est destinée à connecter électriquement et mécaniquement des accumulateurs électrique pour constituer une batterie. Dans le présent exemple, la structure de connexion 1 est prévue pour trois accumulateurs de forme cylindrique.

La structure de connexion comporte un élément conducteur qui est ici formé par trois structures élémentaires 2 correspondant chacune à un accumulateur. La structure de connexion comporte un connecteur 3 électriquement relié à l'élément conducteur.

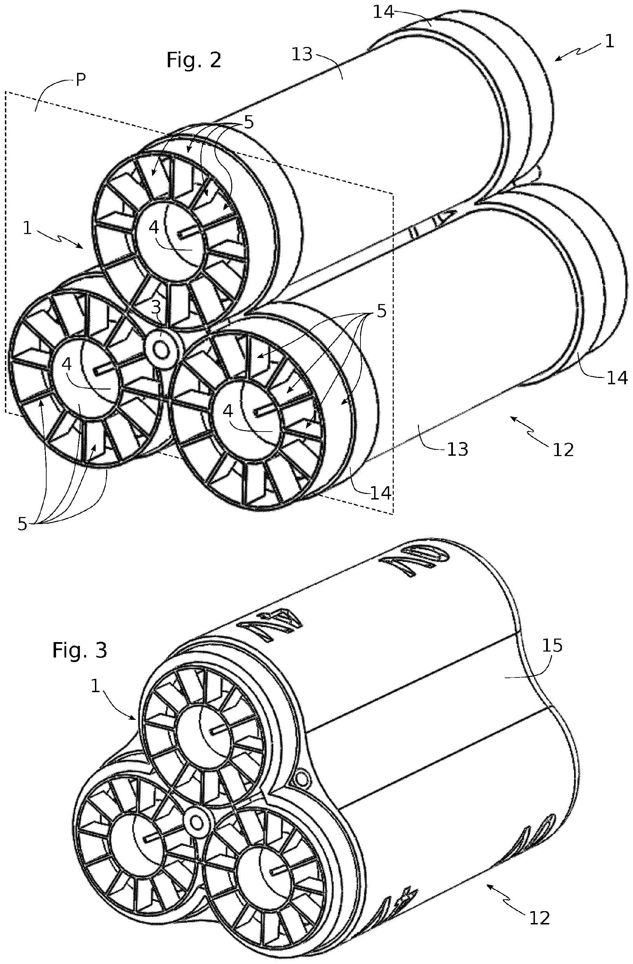

Chacune des structures élémentaires 2 est constituée d'une lame de contact 4 s'étendant selon un plan de connexion et d'un ensemble de lames de conduction 5 qui s'étendent suivant une direction sensiblement perpendiculaire au plan de connexion. Un plan de connexion est schématiquement matérialisé par le plan P sur la figure 2. Ce plan correspond au plan dans lequel s'étendent les lames de contact 4. Dans le présent exemple, toutes les lames de contact 4 s'étendent dans le même plan de connexion P.

La notion de sensiblement perpendiculaire signifie, pour chaque lame de conduction 5, une extension selon la direction perpendiculaire à P largement dominante par rapport à son extension selon des directions dans le plan P. Ainsi, la lame de conduction 5 peut être strictement perpendiculaire au plan P, mais peut également faire un angle limité - typiquement inférieur à 30 degrés - avec cette perpendiculaire.

Les lames de contact sont ici des disques métalliques centrés sur la structure élémentaire 2 correspondante, et comportent chacun une ouverture traversante de soudage 6 prévue pour permettre le soudage de la lame de contact 4 sur la borne correspondante de l'accumulateur.

Les lames de contact 4 sont séparées les unes des autres, c'est-à-dire que les lames de contact 4 ne sont pas reliées les unes aux autres dans le plan de connexion P. Il n'y a pas de continuité de matière entre les lames de contact 4, dans le plan de connexion P (ou entre les différents plans de connexion P si les lames de contact 4 ont des plans de connexion P différents mais parallèles). Les lames de contact 4 sont électriquement reliées les une aux autres uniquement par les lames de conduction 5 qui sont, elles, perpendiculaires au plan de connexion P.

L'ensemble des lames de conduction 5 comporte ici :
- une paroi cylindrique interne 7, saillante de la périphérie du disque constituant la lame de contact 4 ;
- une paroi cylindrique externe 8, coaxiale à la paroi cylindrique interne 7, et de diamètre plus important que la paroi cylindrique interne 7, ce diamètre correspondant au diamètre externe de l'accumulateur cylindrique pour lequel la structure de connexion 1 est prévue ;
- des lames de conduction angulairement réparties autour de la paroi cylindrique interne 7, formant des ailettes 9, entre la paroi cylindrique interne 7 et la paroi cylindrique externe 8 ;
- des lames de jonction 10 reliant les structures élémentaires 2 entre elles.

Dans le présent exemple, les lames de contact 4 et les lames de conduction 5 présentent toutes une épaisseur de l'ordre de 0,5 mm. Les lames de conduction présentent toutes une hauteur (c'est-à-dire une dimension suivant la direction perpendiculaire au plan de connexion P) de l'ordre de 10 mm.

Le connecteur 3 est ici réalisé par un alésage dont l'axe est perpendiculaire au plan de connexion P, et est positionné dans un interstice central entre les trois structures élémentaires 2, contre chacune des parois cylindriques externes 8.

Avantageusement, toute la structure de connexion 1 incluant le connecteur 3, les lames de contact 4 et les lames de conduction 5, est réalisée d'une seule pièce de métal présentant une bonne conductivité électrique et thermique, tel que le cuivre, l'aluminium, l'acier. L'aluminium est une option particulièrement intéressante étant donné sa haute conductivité électrique et thermique et sa masse volumique faible. Certains post-traitements sont à considérer comme des options intéressantes : traitement thermique pour augmenter la conductivité électrique, la rigidité mécanique et la détente des contraintes du matériau ; traitement de surface (tel que nickel, argent, étain, zinc, or) pour améliorer la résistance à la corrosion et diminuer les résistances de contact électrique ; isolation électrique (par revêtement d'un polymère ou anodisation, par exemple) pour isoler électriquement les lames de conduction de l'extérieur si nécessaire.

Les procédés de fabrication additive, par exemple, permettent avantageusement de réaliser une telle pièce métallique avec les formes complexes ici mises en oeuvre.

Les lames de conduction 5 et les lames de contact 4 peuvent être formées de clinquants métalliques.

Les lames de conduction délimitent entre elles des alvéoles 11 débouchant de part en part dans la direction perpendiculaire au plan de connexion. Ces alvéoles 11 peuvent donc être traversées par l'air ambiant ou par un fluide de refroidissement en opposant une résistance fluidique très faible dans la direction perpendiculaire au plan de connexion, cette résistance correspondant simplement à la faible épaisseur des lames de conduction 5.

Par ailleurs, chaque lame de contact 4 délimite, avec la surface cylindrique interne 7, une cavité 18 utile notamment pour l'opération de soudage décrite plus loin. La lame de contact 4 constitue le fond de cette cavité 18 et la surface cylindrique interne 7 (qui est une lame de conduction 5) constitue les parois latérales de cette cavité 18.

En variante, la lame de contact 4 peut délimiter une cavité avec d'autres lames de conduction 5 que la paroi cylindrique interne 7.

La figure 2 illustre une batterie 12 formée de trois accumulateurs 13 qui sont mécaniquement maintenus ensemble, et électriquement connectés par deux structures de connexion 1 telles que celle représentée à la figure 1.

Chaque structure de connexion 1 connecte les trois bornes situées à l'une des extrémités du groupe d'accumulateurs, pour former l'un des pôles de la batterie 12. Le connecteur 3 de chaque structure de connexion 1 offre une connectique pour la borne correspondante de la batterie 12. Les connecteurs 3 s'étendent sensiblement selon la même hauteur (dimension suivant la direction perpendiculaire au plan de connexion P) que les lames de conduction 5, et présentent ainsi une hauteur suffisante pour la connexion, par exemple, d'une fiche de type banane.

Les parois cylindriques externes 8 viennent dans le prolongement du profil extérieur des accumulateurs 13. Des bagues isolantes 14 sont de plus prévues pour éviter tout court-circuit entre des parois des accumulateurs 13 de potentiels différents.

Chaque lame de contact 4 est raccordée électriquement à une extrémité d'accumulateurs 13 qui correspondant à une borne de cet accumulateur 13. Dans le présent exemple, les lames de contact 4 sont électriquement soudées sur la borne de l'accumulateur 13, le long de l'orifice traversant de soudage 6 qui est ici en forme de fente.

La structure de connexion 1 forme ainsi un élément mécanique rigide et électriquement conducteur donnant néanmoins accès directement aux extrémités des accumulateurs 13 et permettant la circulation d'un fluide de refroidissement, notamment l'air ambiant, ou tout autre fluide qui peut être mis en circulation. Les alvéoles 11 forment également ici une ou plusieurs cheminées de dégazage pour les accumulateurs 13, en formant une structure tubulaire s'étendant le long de la direction perpendiculaire au plan de connexion P.

Par ailleurs, la disposition des lames de conduction 5 peut être choisie pour que les alvéoles 11 assurent également une fonction de coupe-flamme. Les alvéoles 11 sont alors dimensionnées avec une section de passage réduite, suffisamment faible pour étouffer le passage d'une flamme. Dans le cas d'un dégazage, voire d'un départ de feu, de telle alvéoles 11 vont absorber une partie de la chaleur des gaz émis, par leur disposition dans la direction d'émission de ces gaz, et les propriétés de conductivité thermique du matériau les constituant. Une telle section réduite pour les ailettes 11 peut être dimensionnée de la même manière que dans le domaine des conduits de fluides explosifs.

L'utilisation d'ailettes comportant un angle limité par rapport à la perpendiculaire au plan P peut faciliter l'évacuation des gaz lors d'un dégazage en créant une dynamique de vortex dans le flux de gaz, facilitant sa dispersion et dilution.

La batterie 12 peut être assemblée selon le procédé suivant :
- mise en position des deux structures de connexion 1 sur l'ensemble d'accumulateurs 13, sur les deux extrémités de cet ensemble ;
- soudage de chaque lame de contact 4 sur une borne d'un des accumulateurs 13, en disposant une tête de soudage dans la cavité 18 formée par la lame de contact 4 et la paroi cylindrique interne 7.

La lame de contact 4 et la borne correspondante sur l'accumulateur 13 peuvent être raccordées par exemple par soudage laser, soudage électrique, soudage ultrasonique. Les lames de contact 4, dont la fonction est relative à la jonction avec les accumulateurs 13, peuvent être dimensionnées pour participer au mieux à cette étape de soudage. Le diamètre interne de la paroi cylindrique interne 7 (qui correspond au diamètre de la lame de contact 4 elle-même) est ici choisi pour laisser passer la tête de soudage, par exemple une tête de soudage électrique comportant typiquement deux électrodes de 3 mm écartées de 5 à 8 mm.

Selon un autre exemple, la cavité 8 peut être aménagée pour le soudage laser. La hauteur de la paroi cylindrique interne 7 (sa dimension dans la direction perpendiculaire au plan de connexion P) est choisie qu'une tête de soudage laser puisse venir s'appuyer, par exemple par un épaulement, sur la tranche de la paroi cylindrique interne 7, de sorte à maintenir un écartement prédéterminé entre la lame de contact 4 et la tête de soudage. Cet écartement prédéterminé entre la tête laser et la surface de la lame de contact 4 correspond à la distance focale requise pour l'opération de soudage de la lame de contact 4 sur l'accumulateur 13.

Le procédé d'assemblage de la batterie 12 peut être complété par l'ajout d'un capot de protection 15 tel qu'illustré à la figure 3, remplissant simplement une fonction de protection dans la mesure où la liaison mécanique entre les accumulateurs 13 est assurée en totalité, ou en grande partie, par la rigidité procurée par les structures de connexions 1.

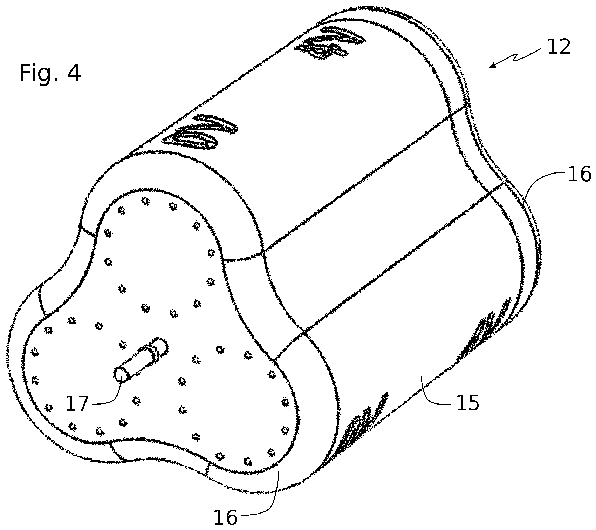

Le procédé peut également comporter des étapes de fixation de couvercles d'extrémité 16 encapsulant chaque structure de connexion 1, comme illustré à la figure 4.

Seule une borne extérieure de connexion 17 est saillante de chaque couvercle 16, ces bornes de connexion 17 étant branchées sur le connecteur 3 correspondant.

Des variantes de réalisation peuvent être mises en oeuvre. Notamment, les formes des lames de conduction 5 peuvent être différentes de celles données ici en exemple, dans leurs formes et agencements, tant que ces lames de conduction s'étendent dans la direction perpendiculaire au plan de connexion. Par exemple, la paroi cylindrique interne peut s'étendre selon un cylindre d'une autre base que circulaire, par exemple carrée, en association avec une lame de contact carrée. De même pour la paroi cylindrique externe qui peut s'étendre selon d'autres bases que circulaire, pour corresponde à la section d'un accumulateur donné.

## Revendications

1. Structure de connexion de batterie d'accumulateurs, adaptée à connecter électriquement les accumulateurs d'une batterie d'accumulateurs, **caractérisée en ce qu'**elle comporte un élément conducteur qui comprend : des lames de contact (4) séparées s'étendant chacune selon un plan de connexion (P), ces lames de contact (4) étant chacune adaptée à être connectée à une borne de batterie d'accumulateur, toutes les lames de contact (4) s'étendant dans le même plan de connexion (P) ; un ensemble de lames de conduction (5) reliant électriquement les lames de contact (4), ces lames de conduction (5) s'étendant sensiblement perpendiculairement au plan de connexion (P).

2. Structure de connexion selon la revendication 1, **caractérisée en ce que** chaque lame de contact (4) et une lame de conduction (5) délimitent une cavité (18) dont la lame de contact (4) constitue le fond et dont ladite lame de conduction (5) constitue les parois latérales.

3. Structure de connexion selon l'une des revendications précédentes, **caractérisée en ce que** les lames de conduction (5) délimitent entre elles des alvéoles (11) débouchant de part en part dans la direction sensiblement perpendiculaire au plan de connexion (P).

4. Structure de connexion selon l'une des revendications précédentes, **caractérisé en ce que** l'ensemble de lames de conduction (5) comporte une paroi cylindrique interne (7) fixée sur la périphérie de chaque lame de contact (4), cette paroi cylindrique interne (7) s'étendant selon un cylindre dont la base correspond au contour de la lame de contact (4).

5. Structure de connexion selon la revendication 4, **caractérisé en ce que** l'ensemble de lames de conduction (5) comporte une paroi cylindrique externe (8) coaxiale à la paroi cylindrique interne (7), la paroi cylindrique interne (7) et la paroi cylindrique externe (8) étant reliées par des ailettes (9) angulairement réparties autour de la paroi cylindrique interne (7).

6. Structure de connexion selon l'une des revendications précédentes, **caractérisée en ce que** l'élément conducteur comporte une pluralité de structures élémentaires (2) identiques formées chacune d'une lame de contact (4) et de plusieurs lames de conduction (5), l'ensemble de lames de conduction (5) comportant de plus des lames de jonction (10) reliant les structures élémentaires (2) entre elles.

7. Structure de connexion selon l'une des revendications précédentes, **caractérisée en ce que** les lames de contact (4) sont en forme de disque.

8. Structure de connexion selon l'une des revendications précédentes, **caractérisée en ce que** chaque lame de contact (4) comporte une ouverture traversante de soudage (6).

9. Structure de connexion selon l'une des revendications précédentes, **caractérisé en ce que** les lames de contact (4) et l'ensemble de lames de conduction (5) sont faits d'une seule pièce.

10. Structure de connexion selon l'une des revendications précédentes, **caractérisée en ce qu'**elle comporte un connecteur électrique (3) s'étendant dans la direction perpendiculaire au plan de connexion (P), et qui est électriquement relié à l'élément conducteur.

11. Structure de connexion selon l'une des revendications précédentes, **caractérisée en ce que** les lames de conduction (5) et les lames de contact (4) sont formées de clinquants métalliques.

12. Procédé d'assemblage d'une batterie d'accumulateurs (12), **caractérisé en ce qu'**il comporte les étapes suivantes :
- mise en position d'une structure de connexion (1) conforme aux revendications 2 à 11 sur un ensemble d'accumulateurs (13) ;
- soudage de chaque lame de contact (4) sur une borne d'un des accumulateurs (13) dudit ensemble d'accumulateurs, en disposant une tête de soudage dans ladite cavité (18).

13. Procédé selon la revendication 12, **caractérisé en ce que** ladite tête de soudage est une tête laser, et **en ce que**, lors de l'étape de soudage, la tête de soudage est appuyée sur une lame de conduction (5), de sorte à maintenir un écartement prédéterminé entre la lame de contact (4) et la tête de soudage.

14. Procédé selon l'une des revendications 12 ou 13, **caractérisé en ce qu'**il comporte une étape préliminaire de fabrication de la structure de connexion (1) par fabrication additive.
